(19) Europäisches Patentamt
European Patent Office
Office européen des brevets

(11) **EP 4 803 599 A1**

(12) **EUROPEAN PATENT APPLICATION**
published in accordance with Art. 153(4) EPC

(43) Date of publication:
**09.09.2026 Bulletin 2026/37**

(21) Application number: **24885587.6**

(22) Date of filing: **24.10.2024**

(51) International Patent Classification (IPC):
***C11D 7/50*** *(2006.01)* ***C11D 7/26*** *(2006.01)*

(52) Cooperative Patent Classification (CPC):
**B08B 3/08; C11D 7/26; C11D 7/50**

(86) International application number:
**PCT/JP2024/037951**

(87) International publication number:
**WO 2025/094814 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.11.2023 JP 2023187592**

(71) Applicant: **Tosoh Corporation**
**Shunan-shi, Yamaguchi 746-8501 (JP)**

(72) Inventors:
- **YAMAGUCHI Kenta**
  **Ayase-shi Kanagawa 252-1123 (JP)**
- **IWABU Kazuhiro**
  **Ayase-shi Kanagawa 252-1123 (JP)**
- **IIDA Takashi**
  **Ayase-shi Kanagawa 252-1123 (JP)**
- **ANZAI Toshiyuki**
  **Ayase-shi Kanagawa 252-1123 (JP)**
- **IIGUSA Hitoshi**
  **Ayase-shi Kanagawa 252-1123 (JP)**

(74) Representative: **Müller-Boré & Partner Patentanwälte PartG mbB**
**Friedenheimer Brücke 21**
**80639 München (DE)**

# (54) DETERGENT COMPOSITION AND RECYCLING SYSTEM

(57) Provided are a detergent composition that, in the cleaning of a component or the like to which a contaminant such as a metalworking oil has adhered, exhibits high cleaning performance, low toxicity and reduced fire hazard associated with the detergent, and excellent recyclability by a means other than distillation, and an energy-saving recycling system for recycling the composition by a means other than distillation. The recycling system for a detergent composition includes: step (1) of cleaning an object to be cleaned by dispersing a solvent component of a detergent composition, which contains a poorly water-soluble solvent, has a water content in a range of 60 vol% or more and less than 90 vol%, and exhibits a cloud point of 20°C to 70°C, in water while maintaining the detergent composition at a temperature equal to or higher than the cloud point; step (2) of cooling the detergent composition after cleaning to a temperature equal to or lower than the cloud point, and phase-separating a contaminant from the detergent composition; step (3) of removing the contaminant phase-separated from the detergent composition by a separation means other than distillation; and step (4) of reusing the detergent composition, from which the contaminant has been removed, in the step (1) for an uncleaned object.



Processed by Luminess, 75001 PARIS (FR)

## Description

### Technical Field

The present disclosure relates to a detergent composition capable of removing machining oils and the like adhering to processed components, products, and the like in various industrial fields, and being recycled by a means other than distillation, as well as a recycling system therefor. More specifically, the disclosure relates to a recycling system in which an article is cleaned using a detergent composition containing water and exhibiting a cloud point, and thereafter a contaminant component mixed into the detergent composition is separated from the detergent composition by a method other than distillation.

### Background Art

Components and the like handled in various industrial fields such as automobiles, machinery, precision instruments, electricity, and electronics are subjected to the use of various metalworking oils and processing agents such as a flux during the manufacture thereof, and ordinarily, components and the like to which such a substance (hereinafter referred to as "contaminant") has adhered are cleaned, and thereafter undergo subsequent processing or are made into finished products.

For the cleaning of a contaminant, various detergents, such as aqueous, semi-aqueous, halogen-based, hydrocarbon-based, and solvent-based detergents, and cleaning systems are used. However, no cleaning system exists that is fully satisfactory in terms of safety of the detergent, cleaning performance, recyclability, power consumption, and the like.

A detergent, such as an aqueous detergent or a semi-aqueous detergent, formulated with a surfactant cannot in principle be recycled because separation of a contaminant by distillation is difficult, and cleaning is therefore performed by periodically replacing the detergent. Therefore, the replacement work is complicated, and there is a problem that a considerable amount of waste liquid is generated.

Those that contain no surfactants, such as halogen-based, hydrocarbon-based, and solvent-based detergents, are recycled by distillation separation, which exploits a large difference in boiling point between the detergent and a high-boiling-point contaminant. However, halogen-based detergents have problems of toxicity, regulatory restrictions, or high detergent costs, while hydrocarbon-based and solvent-based detergents have flammability and pose a high risk of fire, thereby requiring explosion-proof equipment and fire protection facilities, and thus entailing significant facility costs and sufficient operational controls.

In view of these problems, a detergent containing no surfactant or the like by blending water into a water-soluble solvent to eliminate flammability has been proposed. However, those that are recyclable are all recycled by distillation, which requires energy corresponding to the boiling point and latent heat of vaporization of the detergents, resulting in high power consumption and a significant burden on the global environment. (see Patent Literatures 1 to 4)

### Citation List

#### Patent Literature

Patent Literature 1: WO 2015/060379 A
Patent Literature 2: JP 2019-052277 A
Patent Literature 3: JP 2019-031690 A
Patent Literature 4: JP 2013-129815 A

### Summary of Invention

#### Technical Problem

An object of the present disclosure is to provide a detergent composition that, in the cleaning of components and the like to which a contaminant such as a metalworking oil has adhered, exhibits high cleaning performance, low toxicity and reduced fire hazard associated with the detergent, and excellent recyclability by a means other than distillation, and an energy-saving recycling system for recycling the composition by a means other than distillation.

Solution to Problem

In view of such circumstances, the present inventors have conducted various studies in order to solve the above-described problems, and as a result, have found an intended detergent composition and a recycling system therefor, and have completed the present invention.

That is, the present disclosure includes the following embodiments.

[1] A detergent composition containing a poorly water-soluble solvent and water, in which the detergent composition has a water content in a range of 60 vol% or more and less than 90 vol%, and exhibits a cloud point of 20°C to 70°C.
[2] The detergent composition according to [1], in which the poorly water-soluble solvent is a solvent that does not dissolve in water at 1 g/100 g of water or more at 70°C in any proportion.
[3] The detergent composition according to [1], in which the poorly water-soluble solvent is one or two or more selected from a group consisting of diethylene glycol methyl propyl ether, diethylene glycol methyl butyl ether, diethylene glycol diethyl ether, dipropylene glycol dimethyl ether, ethylene glycol hexyl ether, diethylene glycol hexyl ether, propylene glycol butyl ether, dipropylene glycol propyl ether, propyl lactate, and butyl lactate.
[4] The detergent composition according to [1] or [2], further containing a readily water-soluble solvent.
[5] The detergent composition according to [4], in which the readily water-soluble solvent is a solvent that dissolves in water in any proportion.
[6] The detergent composition according to [4], in which the readily water-soluble solvent is one or two or more selected from a group consisting of ethylene glycol monobutyl ether, diethylene glycol monomethyl ether, diethylene glycol monoethyl ether, diethylene glycol monopropyl ether, diethylene glycol monobutyl ether, diethylene glycol monoisobutyl ether, propylene glycol monopropyl ether, dipropylene glycol monomethyl ether, dipropylene glycol monoethyl ether, ethylene glycol, diethylene glycol, propylene glycol, methoxybutanols such as 3-methoxy-1-butanol and 3-methoxy-3-methylbutanol, methyl lactate, ethyl lactate, tetrahydrofurfuryl alcohol, furfuryl alcohol, 2-dimethyl-1,3-dioxolane-4-methanol, gamma-butyrolactone, and diacetone alcohol.
[7] A recycling system for a detergent composition, the system including:

step (1) of cleaning an object to be cleaned by dispersing a solvent component of the detergent composition according to any one of [1] to [6] in water while maintaining the detergent composition at a temperature equal to or higher than the cloud point;
step (2) of cooling the detergent composition after cleaning to a temperature equal to or lower than the cloud point, and phase-separating a contaminant from the detergent composition;
step (3) of removing the contaminant phase-separated from the detergent composition by a separation means other than distillation; and
step (4) of reusing the detergent composition, from which the contaminant has been removed, in the step (1) for an object to be cleaned.

[8] The recycling system according to [5], in which in the step (3), the means other than distillation is a separation means using at least one selected from a gravity separation tank, a coalescer, a centrifugal separator, a filtration membrane, and an adsorption column.
[9] The recycling system according to [8], in which the filtration membrane is a hollow fiber membrane.
[10] The recycling system according to any one of [7] to [9], in which the object to be cleaned is an article having a water-insoluble contaminant adhered thereto.

Advantageous Effects of Invention

According to the present disclosure, it is possible to provide a detergent composition that, in the cleaning of components and the like to which a contaminant has adhered, exhibits high cleaning performance, low toxicity and reduced fire hazard associated with the detergent, and excellent recyclability by a means other than distillation, and enables cleaning with low power consumption, and a recycling system therefor.

Description of Embodiments

Hereinafter, a detergent composition according to one aspect of the present disclosure and a recycling system therefor will be described in detail.

In the present disclosure, the detergent composition contains a poorly water-soluble solvent and water, has a water content in a range of 60 vol% or more and less than 90 vol%, and exhibits a cloud point of 20°C to 70°C.

In the present disclosure, the cloud point refers to a temperature at which a previously transparent solution

becomes cloudy due to a change in temperature, and similarly to a phenomenon known in a nonionic surfactant aqueous solution, the cloud point refers to a temperature at which, when the temperature of an aqueous solution is increased, the solution is separated into a phase mainly containing the solvent component and a phase mainly containing water, and the previously miscible solution begins to turn white and cloudy.

In the present disclosure, a higher water content concentration of the detergent composition is preferable in terms of the separability of the detergent from a contaminant, and is also more effective in eliminating the flash point of the solvent blended in the detergent. A detergent composition having a water content of less than 60 vol% results in insufficient separation of a contaminant from the detergent upon cooling below the cloud point, leading to poor recyclability. When the water content concentration exceeds 90 vol%, the cloud point of the detergent increases rapidly with an increase in the water content concentration, eventually exceeding 70°C, and ultimately the composition ceases to exhibit a cloud point, making cleaning difficult.

The cloud point of the detergent composition is in the range of 20°C to 70°C, and when the cloud point is lower than 20°C, a means for cooling to a lower temperature is required for cooling for separating a contaminant, and energy consumption increases. When the cloud point exceeds 70°C, cleaning at a higher temperature is required during cleaning at or above the cloud point, which causes significant evaporation of water content, leading to large fluctuations in water content concentration and complicated operational controls, and additionally giving rise to the problem of increased energy consumption.

From these points, the water content of the detergent composition is in the range of 60 vol% or more and less than 90 vol%, and the cloud point thereof is in the range of 20°C to 70°C, and more preferably in the range of 30°C to 60°C.

In the present disclosure, the detergent composition to be used has a high water content concentration and no flash point (as confirmed by the test for Class 4 hazardous materials under the Fire Service Act), and thus has a low risk of fire and is preferable.

In the present invention, the detergent composition exhibits a cloud point in the specific range described above, but such a detergent composition is formed of a solvent that has a solubility in water of approximately 1 g/100 g of water or more at 70°C and does not dissolve in water in any proportion (hereinafter referred to as "poorly water-soluble solvent"), or a solvent obtained by further blending a solvent that dissolves in water in any proportion (hereinafter referred to as "readily water-soluble solvent") with a poorly water-soluble solvent. A water-insoluble solvent such as a paraffinic, naphthenic, or aromatic hydrocarbon is unsuitable because such a solvent has extremely low water solubility and does not exhibit a cloud point.

Examples of the poorly water-soluble solvent include glymes such as diethylene glycol methyl propyl ether, diethylene glycol methyl butyl ether, diethylene glycol diethyl ether, dipropylene glycol dimethyl ether, and triethylene glycol dimethyl ether; glycol ethers such as ethylene glycol hexyl ether, diethylene glycol hexyl ether, propylene glycol butyl ether, and dipropylene glycol propyl ether; and lactic acid esters such as propyl lactate and butyl lactate. One type of these can be used or two or more types of these can be used in combination.

Among these, in particular, a detergent composition containing a glyme such as diethylene glycol methyl propyl ether, diethylene glycol methyl butyl ether, diethylene glycol diethyl ether, or dipropylene glycol dimethyl ether has high cleaning performance at or above the cloud point, and even better separability from a contaminant, and can be suitably used.

In addition, a detergent composition containing a poorly water-soluble glycol ether such as ethylene glycol hexyl ether, diethylene glycol hexyl ether, propylene glycol butyl ether, or dipropylene glycol propyl ether, or a poorly water-soluble lactic acid ester such as propyl lactate or butyl lactate has an effect of suppressing an increase in the cloud point accompanying an increase in the water content concentration. Therefore, by blending with another solvent, the water content concentration range in which the cloud point of the detergent is in the range of 20°C to 70°C can be widened, and the detergent composition can be more preferably used.

In the present disclosure, the detergent composition containing only a poorly water-soluble solvent may not necessarily exhibit a cloud point in the range of 20°C to 70°C over the entire range of the water content concentration of 60 vol% or more and less than 90 vol%. When the cloud point is lower than this range at a certain water content concentration, the cloud point range can be adjusted to the above-mentioned cloud point range by blending a poorly water-soluble solvent having higher water solubility or a readily water-soluble solvent. Conversely, when the cloud point is high at a certain water content concentration, the cloud point range can be adjusted to the cloud point range of the present invention by blending a poorly water-soluble solvent having lower water solubility.

The readily water-soluble solvent is not particularly limited as long as it is a water-soluble solvent that is miscible with water in any proportion at approximately 20°C. However, depending on the blending ratio, it may cause the appearance of a flash point or deterioration of drying performance, and therefore a solvent having a boiling point of approximately 150°C or higher and 230°C or lower is preferable, and examples thereof include glycol ethers such as ethylene glycol monobutyl ether, diethylene glycol monomethyl ether, diethylene glycol monoethyl ether, diethylene glycol monopropyl ether, diethylene glycol monobutyl ether, diethylene glycol monoisobutyl ether, propylene glycol monopropyl ether, dipropylene glycol monomethyl ether, and dipropylene glycol monoethyl ether; glycols such as ethylene glycol,

diethylene glycol, and propylene glycol; methoxybutanols such as 3-methoxy-1-butanol and 3-methoxy-3-methylbutanol; lactic acid esters such as methyl lactate and ethyl lactate; cyclic ether alcohols such as tetrahydrofurfuryl alcohol, furfuryl alcohol, and 2-dimethyl-1,3-dioxolane-4-methanol; gamma-butyrolactone, and diacetone alcohol. One type of these can be used or two or more types of these can be used in combination.

These poorly water-soluble solvents and readily water-soluble solvents preferably have a boiling point of 150°C or higher. When the boiling point is lower than 150°C, the flash point does not disappear even when water is blended, and the risk of ignition increases. When the boiling point exceeds 230°C, drying after cleaning becomes difficult, thereby requiring rinsing with pure water or other solvents having a lower boiling point.

In the present disclosure, since the detergent composition has a high water content concentration and is used at a relatively high cleaning temperature equal to or higher than the cloud point, the detergent composition may, depending on the conditions of use, be prone to causing oxidative degradation of the detergent, corrosion of a metal object to be cleaned, or the like. It is more preferable to further add an antioxidant such as 2,6-di-tert-butyl-p-cresol, thymol, methoxyphenol, n-propyl gallate, or hydroquinone, a corrosion inhibitor such as benzotriazole, tolyltriazole, or an imidazole, or the like within a range that does not deviate from the characteristics of the detergent composition.

In the present disclosure, a surfactant such as a polyoxyethylene alkyl ether, a polyoxyethylene alkyl phenol, a polyoxyethylene fatty acid ester, an ethylene oxide propylene polymer, a polyoxyethylene alkyl phenol, or a polyhydric alcohol fatty acid ester may be further contained within a range that does not deviate from the characteristics of the detergent composition.

In the present disclosure, other polyhydric alcohol derivatives, esters, ethers, amines, amides, and the like may be further contained within a range that does not impair the performance of the detergent composition.

In the present disclosure, the detergent composition can also be applied to a contaminant that is poorly soluble in water, such as a flux, a wax, a grease, an ink, a resist, or a buff, in addition to a contaminant such as a machining oil.

In the present disclosure, a recycling system for a detergent composition includes: step (1) of cleaning an object to be cleaned by dispersing a solvent component of the detergent composition in water while maintaining the detergent composition at a temperature equal to or higher than the cloud point; step (2) of cooling the detergent composition after cleaning to a temperature equal to or lower than the cloud point, and phase-separating a contaminant from the detergent composition; step (3) of removing the contaminant phase-separated from the detergent composition by a separation means other than distillation; and step (4) of reusing the detergent composition, from which the contaminant has been removed, in the step (1) for an uncleaned object.

In the present disclosure, the recycling system cools the detergent composition to a temperature lower than the cloud point after cleaning the object to be cleaned, phase-separates a contaminant contained in the detergent, and removes the phase-separated contaminant from the detergent composition for recycling.

When the object to be cleaned is cleaned at a temperature equal to or higher than the cloud point, the detergent composition is in a state of being phase-separated into a phase containing a solvent as a main component (solvent phase) and a phase containing water as a main component (aqueous phase), and by cooling to a temperature lower than the cloud point, the solvent phase and the aqueous phase form a homogeneous solution to lower the solubility of the contaminant and cause separation into a phase of the detergent (detergent phase) and a phase mainly containing the contaminant (contaminant phase). The separated contaminant (contaminant phase) is then separated from the detergent phase using a removal means and the detergent phase is recycled in the cleaning step.

In the step (2), the cooling temperature need only be lower than the cloud point of the detergent composition, but since the contaminant separability improves at a temperature lower than the cloud point, the cooling temperature is preferably at least 5°C below the cloud point, and more preferably at least 10°C below the cloud point. Since cooling to even lower temperatures does not significantly improve the separability, it is preferable to cool to a temperature of approximately 5°C to 20°C below the cloud point.

The means for cooling the detergent composition does not particularly require a cooling means when it naturally falls below the cloud point after cleaning, but when a heat exchanger such as air cooling or water cooling is provided, quick cooling is possible. As the heat exchanger, for example, a conventional heat exchanger such as a fin tube type, a plate type, a coil type, or a shell-and-tube type can be used.

In the step (3), the means for separating the detergent composition from a contaminant is formed of one or two or more separation means selected from the group consisting of a gravity separation tank, a coalescer, a centrifugal separator, a filtration membrane, and an adsorption column, other than distillation.

The separation means is selected according to the required cleanliness and recycling speed of the detergent composition taking into account factors such as the droplet size of the contaminant phase and the difference in specific gravity from the detergent composition, and the like, and two or more separation means can be combined.

When the droplet size of the contaminant phase is large, an oil-water separation tank, which has low device costs and is easy to manage, is preferable. However, since the separation speed is slow and the process takes time, separation using a centrifugal separator or a filtration membrane is preferable. It is also possible to use a coalescer to increase the droplet size and accelerate the separation speed.

As the centrifugal separator, a conventional one such as a batch type or a continuous type can be used as long as liquid-liquid separation is possible, and there is no particular limitation, but a continuous type which can increase the processing amount and is easy to automate is preferable, and a conventional one such as a disk type or a cylindrical type can be used.

In general, a higher centrifugal acceleration or the like of a centrifuge yields good separability from a contaminant and an increased processing speed, but good separation can be achieved provided that the centrifugal acceleration is approximately 400 G or more and the product of the centrifugal acceleration (G) × the processing time (minutes) is approximately 2,000 or more.

Since most oil-based machining oils have a specific gravity of approximately 0.95 or less, and the detergent composition of the present invention has a specific gravity of approximately 1.0, there is a difference in specific gravity between them, and therefore rapid separation can be achieved under the above-mentioned conditions. When the specific gravities of the contaminant and the detergent are close to each other, separation can be achieved by increasing the centrifugal acceleration or centrifugation time, or the like.

As the separation means, a filtration membrane can also be used. As the filtration membrane, a filtration membrane having solvent resistance and a pore size of less than 0.5 μm can be preferably used, and a filtration membrane made of polypropylene, polyamide, Teflon (registered trademark), ceramic, or SUS has durability against many solvents and can be preferably used.

In addition, a hollow fiber membrane has a large membrane surface area per volume, and can be used for a long period of time through measures against pore clogging, such as cross-flow filtration and back-washing, and therefore is preferable.

The pore size of the filtration membrane is preferably a pore size generally classified as a microfiltration membrane (MF membrane) or an ultrafiltration membrane (UF membrane). While a smaller pore size yields good separability of the detergent from a contaminant, it reduces the filtration speed, and therefore a pore size of approximately 0.01 μm to 0.2 μm is more preferable.

Depending on the type of contaminant, a filter for removing solid foreign matter, an ion exchange resin for removing an ionic contaminant, activated carbon for removing a contaminant dissolved in a trace amount, or the like may be provided.

The configurations of other cleaning and drying components of the cleaning system are not particularly limited. For example, ultrasonic cleaning, jet cleaning, immersion cleaning, oscillation cleaning, rotation cleaning, shower cleaning, reduced-pressure ultrasonic cleaning, or the like can be used, and these can be used individually or in a combination of several types, taking into consideration the required cleanliness, the time required for processing, and the like.

Examples

Hereinafter, the present invention will be described in more detail with reference to examples, but the present invention is not limited thereto. In addition, "%" and "part(s)" mean "vol%" and "part(s) by volume" unless otherwise specified.

Examples 1 to 28 and Comparative Examples 1 to 7

Various detergent compositions were prepared, and the measurement of the cloud point, the evaluation of the cleaning performance, and the evaluation of the separability were performed.

The formulations and results of the detergent compositions subjected to the tests are shown in Tables 1 and 2. The solvents used in the detergent compositions are as follows.

(Poorly water-soluble solvent)

BuL butyl lactate
DAP diacetoxypropane
DEBM diethylene glycol n-butyl methyl ether
DEDG diethylene glycol diethyl ether
DEHe diethylene glycol hexyl ether
DEMiP diethylene glycol methyl i-propyl ether
DEMnP diethylene glycol methyl normal propyl ether
DPDM dipropylene glycol dimethyl ether

DPP dipropylene glycol monopropyl ether
PGB propylene glycol n-butyl ether
(Readily water-soluble solvent)
DAA diacetone alcohol
DPM dipropylene glycol monomethyl ether
MMB 3-methoxy-3-methylbutanol
PGPR propylene glycol n-propyl ether

[Table 1]

| | Component (numerical values are expressed in vol%) | | | | Cloud point (°C) | Cleaning performance | Separability (centrifugation) | Separability (hollow fiber membrane) | | Separability (ceramic membrane) |
|---|---|---|---|---|---|---|---|---|---|---|
| | Poorly water-soluble solvent 1 | Poorly water-soluble solvent 2 | Readily water-soluble solvent | Water | | | | Separability | Processing speed | |
| Example 1 | DEMiP(30) | | | 70 | 58 | ◎ | ○ | ○ | ◎ | – |
| Example 2 | DEMnP(30) | | | 70 | 37 | ◎ | ○ | ○ | ◎ | – |
| Example 3 | DEDG(40) | | | 60 | 41 | ○ | ○ | ○ | ◎ | – |
| Example 4 | DEDG(30) | | | 70 | 51 | ○ | ◎ | ◎ | ◎ | – |
| Example 5 | DEDG(20) | | | 80 | 62 | ○ | ◎ | ◎ | ◎ | – |
| Example 6 | DEDG(28) | DAP(2) | | 70 | 46 | ○ | ○ | ◎ | ◎ | – |
| Example 7 | DEDG(28) | BuL(2) | | 70 | 42 | ○ | ◎ | ◎ | ◎ | – |
| Example 8 | DEDG(18) | BuL(5) | DAA(8) | 70 | 44 | ◎ | ○ | ◎ | ○ | – |
| Example 9 | DEDG(18) | BuL(5) | MMB(8) | 70 | 45 | ○ | – | ◎ | ○ | – |
| Example 10 | DEDG(18) | BuL(5) | DPM(8) | 70 | 43 | ○ | – | ◎ | ○ | – |
| Example 11 | DEDG(24) | DPP(6) | | 70 | 42 | ◎ | ○ | ◎ | ◎ | – |
| Example 12 | DEDG(19) | DPP(8) | MMB(4) | 70 | 43 | ◎ | ○ | ◎ | ◎ | ◎ |
| Example 13 | DEDG(22) | DPP(6) | MMB(2) | 70 | 48 | ◎ | ○ | ◎ | ◎ | – |
| Example 14 | DEDG(24) | DPP(4) | MMB(2) | 70 | 49 | ◎ | ◎ | ◎ | ◎ | – |
| Example 15 | DEDG(25) | DPP(3) | MMB(2) | 70 | 50 | ◎ | ◎ | ◎ | ◎ | – |
| Example 16 | DEDG(17) | DPP(9) | DPM(4) | 70 | 40 | ◎ | – | ◎ | ○ | – |
| Example 17 | DPDM(30) | | | 70 | 36 | ○ | – | ◎ | ◎ | – |
| Example 18 | DPDM(26) | | DAA(5) | 70 | 47 | ◎ | ○ | ◎ | ◎ | – |
| Example 19 | DPDM(27) | | MMB(3) | 70 | 42 | ◎ | ◎ | ◎ | ◎ | – |
| Example 20 | DPDM(27) | | DPM(3) | 70 | 43 | ◎ | ◎ | ◎ | ○ | – |
| Example 21 | DPDM(21) | | DPM(9) | 70 | 55 | ◎ | ◎ | ◎ | ○ | – |
| Example 22 | DEBM(14) | | MMB(17) | 70 | 44 | ◎ | – | ○ | ◎ | – |
| Example 23 | DPP(16) | | DPM(14) | 70 | 42 | ○ | – | ○ | ○ | – |
| Example 24 | Composition filtered through hollow fiber membrane in separability evaluation of Example 4 | | | | 51 | ○ | – | – | – | – |
| Example 25 | Composition filtered through hollow fiber membrane in separability evaluation of Example 10 | | | | 43 | ○ | – | – | – | – |
| Example 26 | Composition filtered through hollow fiber membrane in separability evaluation of Example 11 | | | | 42 | ◎ | – | – | – | – |
| Example 27 | Composition filtered through hollow fiber membrane in separability evaluation of Example 12 | | | | 43 | ◎ | – | – | – | – |
| Example 28 | Composition filtered through hollow fiber membrane in separability evaluation of Example 15 | | | | 50 | ◎ | – | – | – | – |

[Table 2]

| | Component (numerical values are expressed in vol%) | | | Cloud point (°C) | Detergency | Separability (centrifugation) | Separability (hollow fiber membrane) | |
|---|---|---|---|---|---|---|---|---|
| | Poorly water-soluble solvent | Readily water-soluble solvent | Water | | | | Separability | Processing speed |
| Comparative Example 1 | DEDG(50) | | 50 | 34 | – | × | × | – |
| Comparative Example 2 | DEDG(10) | | 90 | >80 | – | – | – | – |
| Comparative Example 3 | DEHe(40) | DPM(60) | 70 | 55 | × | – | – | – |
| Comparative Example 4 | PGB(30) | DPM(70) | 70 | 41 | × | – | – | – |
| Comparative Example 5 | | PGPR(30) | 70 | 35 | – | – | – | – |
| Comparative Example 6 | | MMB(30) | 70 | >80 | × | – | – | – |
| Comparative Example 7 | | DPM(30) | 70 | >80 | × | – | – | – |

[Measurement of cloud point]

The detergent composition was placed in a 30 ml glass container and heated in warm water at 80°C or cooled in cold water at 5°C, and the appearance of the detergent composition was visually observed. The temperature at which the detergent composition began to turn white and cloudy was defined as the cloud point.

[Evaluation of cleaning performance]

An oil-based machining oil (FBH-9S, manufactured by Nihon Kohsakuyu Co., Ltd.) was applied to M4 × 20 mm L bolts with nuts, and the bolts were immersed in 100 ml of a detergent composition maintained at a predetermined temperature (10°C to 15°C above the cloud point) and subjected to ultrasonic cleaning for 3 minutes (40 kHz, 200 W). The bolts were then immersed in the same detergent composition for 1 second for rinse cleaning, followed by air blowing and then drying with warm air. The amount of residual oil content on the dried object to be cleaned was measured by oil content measurement, and cleaning performance was evaluated according to the following evaluation criteria.

Evaluation criteria (residual oil content on object to be cleaned)

⊙: less than 0.01, (mg/piece)
○: 0.01 or more and less than 0.02,
△: 0.02 or more and less than 0.03,
×: 0.03% or more,
-: Not evaluated.

[Evaluation of separability]

To 150 parts by volume of a detergent composition (solvent component only), 0.6 parts by weight of an oil-based machining oil (FBH-9S, manufactured by Nihon Kohsakuyu Co., Ltd.) corresponding to about 4,000 ppm as a contaminant was added to and dissolved therein, and the mixture was heated to 70°C, and then mixed with 350 parts by volume of ion-exchanged water at 70°C, followed by stirring for 10 minutes. The mixture was subsequently cooled to 30°C or lower, and the contaminant was separated under the following conditions (1), (2), and (3). The non-volatile content of the detergent composition after separation was measured by a gravimetric method, and separability was evaluated according to the following evaluation criteria. In the case of (1), the time required to obtain 100 ml of a filtrate was also measured.

Separation conditions:

(1) Separation by hollow fiber membrane

Hollow fiber membrane: MF membrane: Microza USP-043 (nominal pore size: 0.1 μm) manufactured by Asahi Kasei

Corporation,
Microza UMP-053 (nominal pore size: 0.2 μm) manufactured by Asahi Kasei Corporation,
UNITIKA MFW040-2 (nominal pore size: 0.04 μm),
UNITIKA MFW100-2 (nominal pore size: 0.1 μm),
UF membrane: UF30 (nominal molecular weight cutoff: 30,000) manufactured by UNITIKA LTD,
Hollow fiber pressure: 0.05 to 0.06 MPa,
Measurement of filtration speed: The time required to obtain 100 ml of a filtrate was measured.

(2) Separation by centrifugal separator

Centrifugal separator: centrifuge CN-1050 (angle rotor RA-5004) manufactured by AS ONE Corporation,
Centrifugation time: 5 to 30 minutes,
Rotation speed: 2000 to 5000 rpm (maximum centrifugal acceleration: 420 G to 2620 G).

(3) Separation by ceramic membrane

Ceramic membrane: Cefilt MF0.1 (nominal pore size: 0.1 μm) manufactured by NGK FILTECH, LTD,
Filtration pressure: 0.10 to 0.15 MPa,
Evaluation criteria (nonvolatile content of detergent composition),
⊙: less than 100 ppm,
○: 100 ppm or more and less than 300 ppm,
△: 300 ppm or more and less than 500 ppm,
×: 500 ppm or more,
-: Not evaluated.

Evaluation criteria (filtration speed of hollow fiber membrane)

⊙: less than 15 minutes,
○: 15 minutes or more and less than 30 minutes,
×: 30 minutes or more,
-: Not evaluated.

Although the present invention has been described in detail and with reference to specific embodiments, it is apparent to those skilled in the art that various changes and modifications can be made without departing from the spirit and scope of the present invention.

The entire contents of the description, claims, and abstract of Japanese Patent Application No. 2023-187592 filed on November 1, 2023 are cited herein and incorporated as the disclosure of the description of the present invention.

## Claims

1. A detergent composition comprising a poorly water-soluble solvent and water, wherein the detergent composition has a water content in a range of 60 vol% or more and less than 90 vol%, and exhibits a cloud point of 20°C to 70°C.

2. The detergent composition according to claim 1, wherein the poorly water-soluble solvent is a solvent that does not dissolve in water at 1 g/100 g of water or more at 70°C in any proportion.

3. The detergent composition according to claim 1, wherein the poorly water-soluble solvent is one or two or more selected from a group consisting of diethylene glycol methyl propyl ether, diethylene glycol methyl butyl ether, diethylene glycol diethyl ether, dipropylene glycol dimethyl ether, ethylene glycol hexyl ether, diethylene glycol hexyl ether, propylene glycol butyl ether, dipropylene glycol propyl ether, propyl lactate, and butyl lactate.

**4.** The detergent composition according to claim 1, further comprising a readily water-soluble solvent.

**5.** The detergent composition according to claim 4, wherein the readily water-soluble solvent is a solvent that dissolves in water in any proportion.

**6.** The detergent composition according to claim 4, wherein the readily water-soluble solvent is one or two or more selected from a group consisting of ethylene glycol monobutyl ether, diethylene glycol monomethyl ether, diethylene glycol monoethyl ether, diethylene glycol monopropyl ether, diethylene glycol monobutyl ether, diethylene glycol monoisobutyl ether, propylene glycol monopropyl ether, dipropylene glycol monomethyl ether, dipropylene glycol monoethyl ether, ethylene glycol, diethylene glycol, propylene glycol, methoxybutanols such as 3-methoxy-1-butanol and 3-methoxy-3-methylbutanol, methyl lactate, ethyl lactate, tetrahydrofurfuryl alcohol, furfuryl alcohol, 2-dimethyl-1,3-dioxolane-4-methanol, gamma-butyrolactone, and diacetone alcohol.

**7.** A recycling system for a detergent composition, the system comprising: step (1) of cleaning an object to be cleaned by dispersing a solvent component of the detergent composition according to any one of claims 1 to 6 in water while maintaining the detergent composition at a temperature equal to or higher than the cloud point; step (2) of cooling the detergent composition after cleaning to a temperature equal to or lower than the cloud point, and phase-separating a contaminant from the detergent composition; step (3) of removing the contaminant phase-separated from the detergent composition by a separation means other than distillation; and step (4) of reusing the detergent composition, from which the contaminant has been removed, in the step (1) for an uncleaned object.

**8.** The recycling system according to claim 7, wherein in the step (3), the separation means is a separation means using at least one selected from a gravity separation tank, a coalescer, a centrifugal separator, a filtration membrane, and an adsorption column.

**9.** The recycling system according to claim 8, wherein the filtration membrane is a hollow fiber membrane.

**10.** The recycling system according to claim 7, wherein the object to be cleaned is an article having a water-insoluble contaminant adhered thereto.

## INTERNATIONAL SEARCH REPORT

International application No.
**PCT/JP2024/037951**

**A. CLASSIFICATION OF SUBJECT MATTER**

***C11D 7/50***(2006.01)i; ***C11D 7/26***(2006.01)i
FI: C11D7/50; C11D7/26

According to International Patent Classification (IPC) or to both national classification and IPC

**B. FIELDS SEARCHED**

Minimum documentation searched (classification system followed by classification symbols)

C11D; B01D; B08B; C23G

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-160799 A (SANWA YUKA KOGYO KABUSHIKI KAISHA) 06 June 2003 (2003-06-06) claims, paragraphs [0013]-[0042] | 1-3, 7-10 |
| Y | | 4-6, 8-9 |
| X | JP 5-9498 A (SANWA YUKA KOGYO KABUSHIKI KAISHA) 19 January 1993 (1993-01-19) claims, paragraphs [0011], [0014]-[0018] | 1-3, 7-10 |
| Y | | 4-6, 8-9 |
| X | WO 2015/060379 A1 (ARAKAWA CHEMICAL INDUSTRIES, LTD.) 30 April 2015 (2015-04-30) paragraphs [0091]-[0096] | 1-3 |
| Y | JP 2013-129815 A (TOSOH CORP.) 04 July 2013 (2013-07-04) claims, paragraphs [0013], [0024], [0036] | 4-6, 8-9 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 December 2024** | **14 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
**PCT/JP2024/037951**

**C. DOCUMENTS CONSIDERED TO BE RELEVANT**

| Category* | Citation of document, with indication, where appropriate, of the relevant passages | Relevant to claim No. |
|---|---|---|
| A | JP 8-158081 A (TOKUYAMA CORPORATION) 18 June 1996 (1996-06-18) | 1-10 |

Form PCT/ISA/210 (second sheet) (July 2022)

**INTERNATIONAL SEARCH REPORT**
**Information on patent family members**

International application No.
**PCT/JP2024/037951**

| Patent document cited in search report | Publication date (day/month/year) | Patent family member(s) | Publication date (day/month/year) |
|---|---|---|---|
| JP 2003-160799 A | 06 June 2003 | (Family: none) | |
| JP 5-9498 A | 19 January 1993 | (Family: none) | |
| WO 2015/060379 A1 | 30 April 2015 | CN 105658780 A | |
| JP 2013-129815 A | 04 July 2013 | CN 103987833 A | |
| JP 8-158081 A | 18 June 1996 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015060379 A
- JP 2019052277 A
- JP 2019031690 A
- JP 2013129815 A
- JP 2023187592 A